# EUROPEAN PATENT APPLICATION

(11) **EP 4 817 426 A1**
(43) Date of publication of application: **07.10.2026**
(21) Application number: 24895188.1
(22) Date of filing: 19.11.2024
(51) Int. Cl.: A23L 7/196, A23L 5/10

(54) **PROCESS FOR PRODUCING INSTANT RICE IN BLOCK FORM AND INSTANT RICE IN BLOCK FORM**

(30) Priority: 01.12.2023 BR 102023025353
(71) Applicant: Millesime Limited, Gibraltar (GI)
(72) Inventor: SCHWARTZMAN, Julio, 01231-010 São Paulo (BR)
(74) Representative: Ponti & Partners, S.L.P
(86) International application number: PCT/BR2024/050529
(87) International publication number: WO 2025/111678

(57) **Abstract**

The present invention discloses a process for producing a food product, more specifically a ready-to-eat rice for cooking, namely an instant rice in block form, which can be reconstituted with a unique crunchy texture and sensory appeal, in a reduced preparation time, either by cooking in a conventional pan or by heating in a microwave oven. The present process includes the steps of metering rice grains into individual portions; continuously cooking in a two-compartment tunnel with constant water exchange; moulding and compacting into blocks; dehydrating by frying; and cooling and packaging.

## Description

### FIELD OF THE INVENTION

The present invention discloses a process for producing a food product, more specifically a process for producing ready-to-eat cooked rice with a reduced preparation time. It also refers to the rice obtained by this process.

### DESCRIPTION OF THE STATE OF THE ART

Rice is one of the main food sources for more than 2/3 of the global population and is the second most produced cereal in the world. Its nutritional properties are valued for containing proteins, carbohydrates, and vitamins. For some countries, rice production plays a strategic role at social and economic levels, such as for Brazil, which is the largest producer of this grain, and where rice is part of the daily diet of the population.

Due to the sociocultural and economic changes occurring in people's daily lives in modern society with regard to food consumption, there is an increase in the demand for ready-to-prepare food products, or instant foods, and among the many types of instant foods is instant rice , also known as quick-cooking rice or QCR (from the English *"*Quick *Cooking Rice"*).

Instant rice is generally uncooked rice that has been pre-cooked to a maximum of 15% moisture, then dehydrated in a commercial oven and packaged. Preparing instant rice requires only a few minutes of rehydration and cooking before the product is ready for consumption. Several examples of instant rice are found in the state of the art.

Patent document KR20130094156 (GO MEE SEON) refers to instant foods to reduce cooking time, which may use a variety of colorants, such as natural powder, as well as the addition of whole grain rice nutrients, and with excellent texture and digestibility. The document discloses a method of manufacturing rice, through steaming rice soaked in water, drying the edible rice and grinding it into grains, splashing the grains in oil and recovering the grains fried in oil. The rice grains in this state are mixed with an edible powder (rice bran), so that the edible powder is uniformly coated and colored on its surface. Despite presenting an easy-to-cook rice, this document discloses the crushing of the rice grains, causing the sensory experience of eating this rice to deviate too much from the experience of eating rice prepared in the traditional way.

US patent 6509053 (ARROCERIAS HERBA S.A.) discloses a process for the industrial preparation of vacuum-packed cooked rice, comprising the steps of cleaning, blanching, cooling, draining, drying, frying, mixing with sauces and/or solids, packaging, soaking, cooking and sterilization. As noted, this document presents a rice maceration process that, like the previously mentioned document, alters the sensory experience. Another important point is that the rice produced is vacuum-packed, which limits its use and application.

Patent document CA1047831 and the corresponding US patent US4166868 (ANDO MOMOFUKU) refer to a process for manufacturing ready-to-eat rice. The process consists of the following steps: soaking the rice grains in water for 15 hours, gelatinizing the soaked rice grains by cooking them in a pot for 25 minutes under steam pressure, drying them with a jet of hot air until they reach a moisture content between 18-35%, followed by laminating the grains through forced passage through rollers with a 0.1 to 1 mm slit. After lamination, a second hot air drying process is carried out to reduce the moisture content to 13%. Finally, the rice undergoes a quick frying in oil at temperatures of approximately 190°C.

In contrast, the present invention describes a new process for the manufacture of ready-to-eat rice, which overcomes the limitations of Canadian patent CA1047831.

The process of the present invention eliminates the need for long periods of soaking rice grains in water, reducing preparation time, speeding up production and eliminating microbiological risks due to the long exposure of the grain to water during the soaking step. In addition, the gelatinization of the grains is carried out more efficiently and in a controlled manner, through a continuous cooking process with controlled time and temperature.

A significant difference from patent CA1047831 is the absence of grain lamination, a technique that can cause grain deformation, impairing integrity and natural appearance after rehydration. In the present process, this step was not performed, thus preserving the original shape and texture of the rice grains.

In summary, the present invention presents an innovative and improved process for the manufacture of ready-to-eat rice, standing out for the simplicity and efficiency of a continuous process, and for the preservation of the natural characteristics of the rice grains. Therefore, the present process offers considerable advantages in terms of practicality, standardization and quality of the final product.

Patent document GB1280436 (NISSIN SHOKUHIN KAISHA LTD) describes a conventional method for producing fried rice for instant cooking. This method involves cooking the rice in a pan for twenty minutes under a pressure of 2 to 3 kg/cm². In this process, the cooked rice undergoes a gradual drying process using hot air, at a progressively higher temperature, starting at 30°C and reaching the range of 90°C, reducing the moisture content to 10% to 20%. Next, the rice grains are subjected to a frying process at 210°C for approximately 15 seconds, resulting in rice grains with an apparent specific gravity between 0.17 and 0.18.

Comparing the GB1280436 process with the present one, firstly a rice cooking process is revealed that allows the formation of individual portions presented in block form. The shapes that divide the portion go through the entire process from cooking to the cooling step. This technique protects the product during the cooking process, preventing grain deformation, as it is subjected to the correct water-to-rice ratio and a carefully studied temperature exposure time to maintain the grain's original characteristics. When comparing the present invention to that described in patent GB1280436, it is observed that cooking rice in a pressure vessel under the proposed parameters leads to grain deformation due to excessive exposure to pressure and heat. The formless mass resulting from this process retains a high level of moisture, requiring a long period of exposure to hot air to reach the 10-20% moisture content required for drying. This limits the ability to operate at scale and greatly increases costs. Furthermore, the drying step is followed by frying at 210°C, which results in excessive expansion considering the apparent specific gravity reported in the document, similar to what happens with corn kernels when transformed into popcorn, losing the original shape and texture of the kernel. On the other hand, the present process results in an apparent specific gravity of 0.52, presenting the natural and original appearance of the grain.

In summary, the present invention discloses a simplified and continuous process flow, which allows for highly productive scale production, providing economic viability for the consumer, especially considering the socioeconomic reality of most countries.

As noted, the state of the art would benefit from a solution that presents a production process for instant rice that maintains the physical integrity of the rice grains so that the sensory experience of tasting the rice is not affected. Additionally, the state of the art would also benefit from a solution that offers a production process for pre-portioned instant rice that is easy to package and store and has a long shelf life.

### OBJECTIVES OF THE INVENTION

The instant rice production process of the present invention aims to obtain a product with stability during its shelf life (room temperature) by mitigating food oxidation, without going through the extrusion step, thus preserving the shape and appearance of the rice grains, i.e., maintaining the naturalness and with a sensory experience equal to that of traditionally prepared rice.

It is also an objective of this invention to preserve the original shape and physical integrity of the rice grains. To this end, innovative techniques and equipment, which optimize all productive aspects efficiently and continuously, have been developed in order to maintain the natural characteristics of the rice grains, ensuring that the product closely resembles the original grain, adding positive sensory attributes.

Another objective of the present invention is to offer a manufacturing process for instant rice in block form, involving a compaction step that preserves the original shape of the grains, ensuring that, when reconstituted, they maintain their natural appearance.

Furthermore, the present invention has a dehydration step by frying the grains in oil, which promotes the maintenance of the physicochemical properties, giving the rice the desired characteristic of stability during its shelf life. Furthermore, this approach prevents the risk of oxidation caused by the oxidizing enzymes naturally present in rice, which are notoriously resistant.

### SUMMARY OF THE INVENTION

The present invention relates to an innovative process for producing instant rice in block form, comprising the steps of compressing cooked rice and the subsequent step of controlled dehydration by frying, which provides a quality product, preserving the original shape of the grains, crunchy texture, stability and convenience for the consumer.

Although conventional approaches to rice production exist, none of them include the precise combination of individual dosing, continuous tunnel cooking, specialized moulding, controlled dehydration, meticulous cooling, sensory customization and protective packaging as proposed in the process of the present invention.

In the compression or specialized moulding step, the rice grains achieve a high density and internal cohesion, reducing the empty spaces. Next, the dehydration step is carried out by frying, where hot oil permeates these empty spaces, promoting an increase in local temperature and a rapid expansion of the moisture present. This process results in reconstituted rice grains with a unique crunchy texture and sensory appeal.

Controlled dehydration in a continuous frying tunnel was developed with the specific objective of providing stability to instant rice at room temperature and preventing oxidation caused by oxidizing enzymes naturally present in rice.

Thus, based on the aforementioned process flows, it was possible to develop solutions for obtaining an instant product that does not go through the extrusion process, thus preserving the natural characteristics of the rice grain, providing the consumer with a unique sensory experience, with practicality and convenience, without compromising the quality and naturalness of the instant rice in block form.

### BRIEF DESCRIPTION OF THE FIGURES

The subject matter of this invention will become fully clear in its technical aspects from the detailed description that will be made based on the figures below, in which:

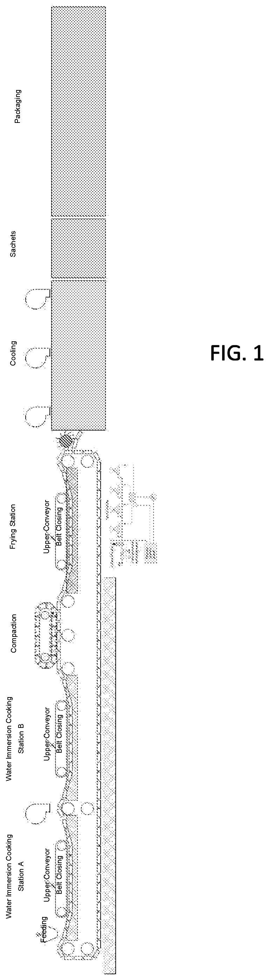

Figure 1 presents a general illustrative drawing of the processing line.

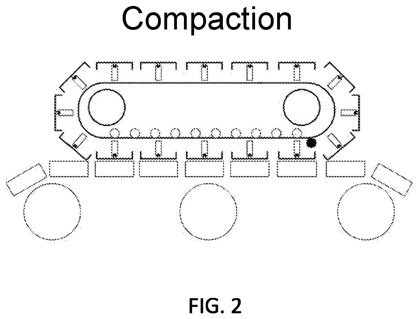

Figure 2 presents an illustrative drawing of the moulding step.

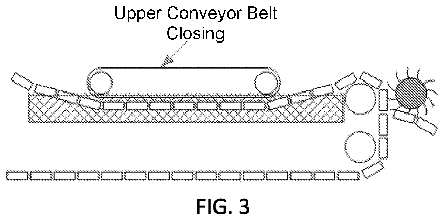

Figure 3 shows an illustrative drawing of the rice in block form transfer device for the de moulding step and cooling conveyor.
Figures 4a-f show illustrative photos demonstrating the appearance of the rice grain at different steps of this process.

### DETAILED DESCRIPTION OF THE INVENTION

In accordance with the objectives presented above, the present invention "PROCESS FOR PRODUCING INSTANT RICE IN BLOCK FORM", which comprises the steps of dosing, cooking and moulding, dehydration, and finally, the cooling and packaging step.

### Rice grain dosing step

In the initial step of the process, the dosing of rice grains plays a crucial role in maintaining the integrity and naturalness of the product. For this purpose, specialized dosing equipment is used, which allows the dosing of individual portions of rice in a continuous processing line.

The dosing equipment consists of the following components:
1. a unique supply system that ensures a consistent and controlled flow of rice grains during the dosing process; and,
2. a silo with multiple volumetric dosers; these dosers are strategically placed on top of a conveyor belt and are designed to precisely measure and dispense rice grains.

The dosing equipment also incorporates several control and safety features, including:
- a separate electronic control panel, which is isolated from the rest of the processing line and incorporates safety relays and a safety contact;
- dosing system with human-machine interface (HMI) control. The dosing process is governed by an HMI control system, which allows for precise adjustments and individual settings for each doser; and,
- an independent Programmable Logic Controller (PLC), a separate PLC, ensures the efficient operation of the dosing system, working in conjunction with the HMI control.

Once dosed, the rice grains are directed into specialized moulds. These moulds are designed to meet specific requirements, as described below:
- Mesh: The mesh used in the moulds is made of stainless steel, with 1.85 mm openings and a distribution of 6 openings per linear inch. This mesh provides the necessary permeability for water and oil during the cooking and frying steps;
- coating: to obtain the necessary level of non-stick properties and facilitate de moulding while the product is still hot after the frying process, the moulds are coated with two layers of polytetrafluoroethylene (PTFE). The PTFE coating is free of perfluorooctanoic acid (PFOA) and has a low coefficient of friction, as well as chemical and thermal resistance suitable for process temperatures, reaching approximately 180 °C. The coating thickness varies from 22.5 to 43 micrometers and is food grade; and,
- format: when designing the dimensions of the moulds, several important factors were considered. In addition to accommodating the necessary volume of rice for an individual serving, the format also ensures a low coefficient of friction to facilitate de moulding. As a result, the base of the mold has a 9-degree incline, with specific length and width measurements, providing a volume of 283,200 cubic millimeters, suitable for the desired portion size.

### Continuous Cooking and moulding Step

After the rice is dosed into the moulds, the grains pass through a cooking tunnel.

During the development of this step of the process, special attention was paid to the risks of contamination of the rice used. It is known that rice is a significant source of the contaminant Arsenic (As), present especially in crops in the Asian region. Research reveals that rice grains from these areas are frequently contaminated with inorganic arsenic (As), which is the most toxic form of this element. Ingestion of this inorganic arsenic (As) has been associated with several health concerns, such as skin, lung, and bladder cancer, as well as possible non-cancerous adverse effects, including respiratory, cardiovascular, neurological, and metabolic diseases.

Due to the rapid expansion of the global food trade, millions of consumers around the world end up being exposed to the risk of ingesting high levels of Arsenic (As) through the consumption of imported rice and rice-based products.

In view of this concern, the present invention was carefully developed to incorporate a specific phase during the cooking step, with the aim of reducing Arsenic (As) levels, in case there is any variation in the raw material used in the manufacture of the product. In the following lines, we will describe this specific phase in detail.

The cooking step consists of a tunnel with two separate compartments. The first compartment performs a continuous washing of the grains, significantly removing the concentration of contaminants. For this, there is a constant exchange of water, and the retention time of the grains in this compartment varies from 4 to 6 minutes. These grains are submerged in circulating water at a temperature of 90 to 98 °C, which provides the removal of this element.

Scientific studies show that cooking rice with high levels of arsenic, when using excess water, results in an effective method for significantly reducing this contaminant. For example Raab et al. (2019) demonstrated that a 6:1 ratio (water:rice) resulted in a 35% and 45% reduction in arsenic concentration in two rice varieties, when compared to uncooked rice. Gray et al. (2016) identified that rice cooked in water free of inorganic contaminants, in a 10:1 ratio (water:rice), reduced the content of inorganic arsenic (the most toxic component) by up to 60%, depending on the variety, Carey et al. (2015) demonstrated that a 12:1 ratio (water:rice) resulted in a 57% reduction of inorganic arsenic.

In the process of the present invention, in the first cooking phase developed to reduce arsenic contamination in rice, a water:rice ratio of 12.8:1 was used. Furthermore, a water flow equivalent to 3 to 4 complete water changes per hour was established, meaning that every 15 to 20 minutes all the water in the tank is renewed. Through this process, a reduction of the contaminant of approximately 75% to 88% was obtained.

Surprisingly, the promising results demonstrated a significant reduction in the presence of arsenic, which represents an important impact on food safety and public health, providing an effective method to minimize exposure to this dangerous contaminant.

In summary, the results obtained revealed a significant reduction in the presence of arsenic in rice when employing a specific water:rice ratio and an appropriate water turnover rate.

In the second compartment, the retention time of the grains also varies from 4 to 610 minutes and the temperature varies between 90 and 98 °C, thus completing the cooking process of the rice grains. At this step, the water is renewed to remove excess starch that is released from the rice, preventing the cooking water from becoming supersaturated. The water exchange rate varies from 30% to 100% of the circulating volume, and water exchange occurs continuously, maintaining a solids level in the cooking water at a maximum of 0.6%. This represents 50% exchange every hour.

At this point in the process, the cooked rice completely fills the mold and must then be compacted to form a compact block, while preserving the natural characteristics of the grains, which can be observed in the product.

The moulding step is a novelty, due to the specificity of the process. In this step, it is ensured that:
- the force applied for compaction must be sufficient to bind the grains together without causing deformation;
- the tool used to apply the force does not affect the integrity of the mold coating; and,
- no physical contamination of the mold's base material with the food occurs.

The compaction step is carried out by a piston coated with non-stick and sanitary material, which prevents product buildup and does not damage the mold coating. A pressure of 1,0 to 1,2 kgf/cm² is applied to the piston in order to carry out the compaction. To correctly position the piston in relation to the moulds, the upper conveyor belt is mechanically synchronized with the mold conveyor belt. The piston only compresses the volume of cooked rice when it is 100% vertical, while the smaller rollers inside the conveyor belt maintain the pressure of the pistons during horizontal movement. At the end of the compaction conveyor belt, the lower roller lifts the piston vertically before returning along the top of the conveyor belt, to avoid damaging the mold coating.

This process allows the block, after the dehydration by frying step, to acquire the following characteristics:
- compact rectangular block shape;
- compact rectangular block with a 5 to 10% reduction in rice volume after cooking;
- dense characteristic in its dry form (after frying), but permeable to water during the reconstitution step at the time of consumption;
- after reconstituting, it allows the rice grains to be seen in their natural form; and,
- during preparation, it can be reconstituted on the stovetop or in the microwave, offering great convenience.

Therefore, the rice presents unique and innovative sensory attributes, such as crispness, texture, flavor, aroma and color, being manufactured by the process of the present invention.

### Dehydration Step

The dehydration process takes place in a continuous frying tunnel, with the oil maintained at a temperature of 150 to 180 °C, for a retention time of 10 to 12 minutes. During this step, heat is transferred from the oil to evaporate the water present in the block. Some of the used oil is incorporated into the product, giving the consumer a distinct flavor after preparation.

This step is extremely important for the process, however, it can have negative effects, such as:
a. reduced product shelf life due to lipid oxidation reaction; and,
b. reduced product lifespan due to hydrolytic oxidation reaction.

Based on these two aspects, the preventive measures contemplated by the process are described below:
(iii) lipid rancidity: this phenomenon occurs when fats and oils come into contact with oxygen in the air, which is accelerated by heat and the presence of catalytic metals. Oxidation begins with the formation of free radicals in the unsaturated fatty acids present in the oil or fat, causing a chain reaction that accelerates the rancidification process of the food, significantly reducing its shelf life. During the oxidation process, several byproducts are formed, giving the product an unpleasant rancid taste.

The process developed includes two containment measures, one of a physical nature and one of a chemical nature:
- physical measurements:
   (i) The process was designed so that the water vapor resulting from the dehydration process, which accumulates at the top of the tunnel, is controllably eliminated, forming a protective layer that reduces the entry of oxygen into the frying dehydration zone. This layer acts as an insulating physical barrier, preventing the oxidation of the fat. To achieve controlled vapor elimination and the formation of the protective layer, a minimum pressure of approximately 30 mm of water column was maintained in the dehydration chamber, preventing or hindering the entry of ambient air. This was done using a pressure gauge, interlocked with an exhaust valve to ensure the proper volume of steam during the dehydration process;
   (ii) Another measure adopted in the development of the process was the presence of a heat exchanger used to cool the fat during line shutdowns. When this occurs, the fat present in the tunnel, which is at a temperature between 150 and 180 °C, is transferred to a surge tank, passing through a filter screen to remove any particles that may have passed from the product into the environment. Next, the fat passes through the heat exchanger, which has the function of reducing its temperature to between 50 and 60°C, preventing slow cooling that would accelerate oxidative reactions, and is finally stored in the surge tank at a maximum temperature of 60°C;
   (iii) In addition, the line has filters through which the processed fat passes continuously as it is pumped to the heat exchanger used to recover the temperature of the medium. These filters remove product fragments that can contaminate the grease, thus preventing these fragments from burning in the heat exchanger tubing and, consequently, the polymerization of the grease. The polymerization of fat leads to the undesirable formation of deposits on the equipment walls, which, in addition to clogging the equipment, promote the oxidation of the fat, resulting in the formation of byproducts that give the product a rancid taste. In this process, the fat passes through two filters: the first is a perforated screen filter, which retains larger particles, and the second is a polishing filter, which captures smaller particles, keeping the frying medium clean and free of unwanted particles;
   (iv) the line has two sets of these filters that operate in compensation mode, in order to avoid interrupting the process for cleaning the filters;
- Chemical measure: chemical prevention to confer greater oxidative stability is related to the frying medium. For this purpose, a formulation was developed composed of oils with a high content of monounsaturated fatty acids, combined with a mixture of antioxidants that includes a blend of tocopherols (alpha, beta, gamma and delta), ascorbyl palmitate, rosemary extract, TBHQ and citric acid. The components of the formulation have the following functionality and quantity:
   1. Tocopherols (alpha, beta, gamma, and delta): Tocopherols are a group of compounds belonging to the vitamin E family. They act as antioxidants, neutralizing and preventing the formation of harmful free radicals, which can lead to lipid oxidation - Participation in the mixture is 300 mg/kg;
   2. Ascorbyl palmitate: also known as vitamin C ester, ascorbyl palmitate is a fat-soluble form of vitamin C. It acts as an antioxidant, inhibiting lipid oxidation and preserving its quality - Participation in the mixture is 100 mg/kg;
   3. Rosemary extract: Rosemary extract contains several phenolic compounds, such as rosmarinic acid and carnosic acid, which exhibit strong antioxidant properties. These compounds help protect fats from oxidation and extend their shelf life. The recommended dosage per mixture is 30 mg/kg;
   4. TBHQ (tert-butylhydroquinone): TBHQ inhibits the formation of free radicals and interferes with the lipid oxidation process. The recommended dosage in the mixture is 70 mg/kg;
   5. Citric acid: Although primarily used as an acidity regulator, citric acid also has antioxidant properties. It helps prevent lipid oxidation by chelating metal ions that can catalyze oxidation reactions. The recommended dosage in the mixture is 200 mg/kg.
By combining these different antioxidants, the aim was to significantly improve the overall oxidative stability of the fats, and surprisingly, the result was to extend their shelf life and preserve the quality of the product.

These preventive measures, of a physical and chemical nature, were implemented in the process with the aim of guaranteeing the quality and stability of the frying medium, thus preventing the occurrence of oxidative reactions and the formation of undesirable flavors in the product.

### Cooling and Final Packaging Step

After the frying step is complete, the rice in block form is removed from the moulds and transferred to a conveyor belt at the entrance to the cooling step.

Transfer between conveyors: the de moulding system and the transfer between the frying outlet and the cooling step are carried out smoothly, in order to preserve the integrity of the rice in block form. This helps to reduce grain losses due to minor breakage, as well as maintaining the net weight as described on the packaging. To perform this transfer, small forks are used. They pick up the fried block at the tilt of the tray, carefully carrying it to the dryer conveyor belt.

The de moulding process was entirely developed by the inventors to allow for transfer without breaking the product, which after the frying process becomes extremely friable and therefore very sensitive to any mechanical action, however gentle it may be.

After the transfer, the used moulds return to the beginning of the production line at the bottom of the frying step, where, on the return journey, they undergo a cleaning process to remove residual oil.

Cooling of the rice in block form: the cooling step plays a key role in reducing the temperature of the rice in block form to below 40 °C in order to prevent condensation from forming in the final packaging. This condensation could lead to microbiological deterioration of the product throughout its shelf life. Furthermore, during this step, a sachet containing the product's flavoring spices is added, thus completing the final product, which consists of the rice in block form and the flavoring sachet.

### Sensory Experience

The distinctive characteristic of the rice resulting from the process of the present invention is manifested through its crunchy texture during consumption of the prepared product. This characteristic arises, in particular, from the compaction and dehydration by frying steps.

The process consists of compacting cooked rice in a mould, using compressive forces that result in a denser and more cohesive structure. By compacting the rice, the empty spaces between the grains are reduced, increasing the interaction between the starch molecules present in the rice.

During frying, when compacted rice is submerged in hot oil, a phenomenon called diffusion occurs. According to the laws of thermodynamics, heat from the oil is transferred to the rice, increasing the local temperature and causing the rapid expansion of the moisture contained in the compacted grains. This expansion creates empty spaces in the internal structure of the rice.

Based on the second law of thermodynamics, it is known that systems tend to seek thermodynamic equilibrium. In this case, the hot oil, which has a higher temperature than the rice, permeates these empty spaces through a process called mass transport, driven by the temperature gradient between the rice and the oil. The oil fills the empty spaces, establishing thermal equilibrium through heat conduction.

During frying, a complex reaction called the Maillard reaction occurs, which involves the caramelization of sugars present in the rice, the fragmentation of proteins, and the formation of aromatic compounds. This reaction contributes to the formation of the crunchy layer on the surface of the rice. The compounds resulting from the Maillard reaction add flavor and give the product its unique texture.

The process of the present invention combines precise dosing, rice compaction with frying in hot oil and presents a complex interaction between the physical and chemical properties of the components involved. The development of this innovative process results in a block of instant rice with a unique and sensorially interesting crunchy texture, which stands out from other options available on the market and provides a unique culinary experience for consumers.

In view of the above, the process and the product obtained, instant rice in block form, provide a solution to the state of the art by enabling the production of perfectly dosed instant rice , maintaining the integrity of the grains, which allows for a differentiated sensory experience, in a block with an optimized shelf life.

The following Examples present the results of production process tests (Example 1), determination of the frying temperature curve (Example 2), identification of the tolerance limit of the starch level in the cooking water (Example 3), comparative analytical data of physicochemical composition (Example 4), evidence proving the naturalness of the grains after the compaction step (Example 5) and shelf life (Example 6).

### Example 1: Production process test

Raw rice was divided into individual portions and placed in 50 moulds. The moulds were then cooked at a temperature of 98°C for 10 minutes so that the starch present in the rice could gelatinize. This process resulted in a 240% increase in mass due to water absorption during cooking.

After the cooking step, the blocks were subjected to compression, where each received a compression force of 117,680 Pascal (1,2_kgf/cm2). Then, the blocks were subjected to dehydration by frying, being exposed to temperatures between 140 and 160°C for 10 minutes.

After dehydration, the blocks were removed from the moulds and cooled. The resulting blocks had a moisture content of 1.2% and a fat content of 14%, as shown in the table below.

| | **Weight after cooking (grams)** | **Mass increase** | **Weight after drying (grams)** | **Moisture** | **Fat (g)** |
|---|---|---|---|---|---|
| **1** | **182** | **233%** | **77** | **0,78** | **14,3** |
| **2** | **181** | **232%** | **76** | **0,88** | **14,8** |
| **3** | **182** | **233%** | **77** | **1,02** | **14,1** |
| **4** | **182** | **233%** | **77** | **1,.07** | **13,6** |
| **5** | **200** | **256%** | **76** | **0,99** | **14,8** |
| **6** | **201** | **258%** | **77** | **1,01** | **15,0** |
| **7** | **199** | **255%** | **77** | **0,85** | **14,3** |
| **8** | **197** | **253%** | **77** | **1,00** | **13,9** |
| **9** | **198** | **254%** | **77** | **0,95** | **15,1** |
| **10** | **197** | **253%** | **76** | **0,86** | **15,7** |
| **11** | **198** | **254%** | **76** | **0,77** | **14,2** |
| **12** | **198** | **254%** | **78** | **0,95** | **14,9** |
| **13** | **201** | **258%** | **77** | **0,99** | **15,2** |
| **14** | **196** | **251%** | **78** | **1,03** | **14,6** |
| **15** | **198** | **254%** | **79** | **1,10** | **13,9** |
| **16** | **194** | **249%** | **78** | **0,91** | **13,6** |
| **17** | **199** | **259%** | **77** | **1,80** | **14,6** |
| **18** | **196** | **258%** | **77** | **0,86** | **14,8** |
| **19** | **186** | **239%** | **78** | **0,90** | **14,1** |
| **20** | **186** | **238%** | **79** | **1,00** | **13,9** |
| **21** | **187** | **240%** | **79** | **0,67** | **14,8** |
| **22** | **186** | **238%** | **80** | **0,86** | **13,6** |
| **23** | **181** | **232%** | **77** | **0,98** | **13,4** |
| **24** | **181** | **232%** | **78** | **0,98** | **13,9** |
| **25** | **184** | **236%** | **80** | **0,77** | **14,6** |
| **26** | **182** | **233%** | **80** | **0,82** | **14,1** |
| **27** | **179** | **229%** | **78** | **0,95** | **16,0** |
| **28** | **180** | **231%** | **80** | **0,99** | **13,6** |
| **29** | **179** | **229%** | **80** | **1,20** | **14,2** |
| **30** | **179** | **229%** | **80** | **1,22** | **14,1** |
| **31** | **179** | **229%** | **76** | **1,25** | **13,8** |
| **32** | **178** | **228%** | **77** | **0,92** | **14,5** |
| **33** | **178** | **225%** | **80** | **0,95** | **13,4** |
| **34** | **179** | **229%** | **78** | **1,20** | **14,5** |
| **35** | **179** | **229%** | **79** | **1,12** | **14,1** |
| **36** | **178** | **228%** | **79** | **1,25** | **14,5** |
| **37** | **179** | **229%** | **78** | **1,34** | **14,5** |
| **38** | **194** | **249%** | **79** | **0,82** | **13,7** |
| **39** | **190** | **244%** | **79** | **0,80** | **13,6** |
| **40** | **189** | **245%** | **78** | **1,10** | **13,9** |
| **41** | **191** | **249%** | **78** | **0,95** | **14,1** |
| **42** | **191** | **245%** | **80** | **1,35** | **14,6** |
| **43** | **192** | **246%** | **79** | **1,02** | **15,0** |
| **44** | **186** | **238%** | **79** | **1,95** | **14,6** |
| **45** | **189** | **242%** | **79** | **1,45** | **14,8** |
| **46** | **190** | **244%** | **80** | **1,82** | **15,1** |
| **47** | **178** | **228%** | **80** | **2,20** | **14,2** |
| **48** | **180** | **231%** | **78** | **4,65** | **14,6** |
| **49** | **180** | **231%** | **78** | **3,20** | **14,8** |
| **50** | **181** | **232%** | **80** | **3,28** | **15,3** |

| | | |
|---|---|---|
| **Average** | **Mass increase** | **240%** |
| | **Moisture %** | **1,24** |
| | **Fat %** | **14,4** |

### Example 2: Tests for determining the frying temperature curve

Based on several successive tests, it was possible to determine the temperature ranges required for the dehydration process, ensuring adequate reduction of moisture in the compacted block. These moisture levels are essential to guarantee the microbiological stability of the product.

The temperature of the dehydrating medium was measured during the drying cycle to achieve a reduction in the moisture content of the compacted block, which varies from 60 to 66%, to a final moisture content of no more than 5%. After careful analysis, the following temperature ranges were established over time and throughout the process, as shown in the table below.

| **Time (minutes)** | **Temperatura range (°C)** |
|---|---|
| 1to2 | 140to149 |
| 2to3 | 122to144 |
| 3to3 | 122to123 |
| 4to5 | 123to124 |
| 5to6 | 125to127 |
| 6to7 | 128to136 |
| 7to8 | 138to150 |
| 8to9 | 152to156 |
| 9to10 | 159to160 |

These data are important in developing an efficient dehydration process, providing the microbiological stability required for the final product.

### Example 3: Tests to identify the tolerance limit for starch levels in cooking water

Consecutive cooking tests were conducted in order to determine the maximum tolerated limit of starch concentration in the cooking water, i.e., the solids content of the cooking medium, without affecting the performance of subsequent process steps. These tests were repeated in duplicate, totaling 5 experiments.

The results show that the maximum limit is reached after 2 cooking cycles, when the moisture content of the dehydrated block exceeds the acceptable limit. A moisture level of up to 5% is considered acceptable. It was noted that results showed values above this limit when the starch concentration in the cooking medium exceeded 0.6%. The table below displays the results obtained and provides data to establish the rate of water turnover during this step of the process.

| **Test identification** | **Solids content of Cooking medium (%)** | **Block weight** | **Moisture content of the block (%)** |
|---|---|---|---|
| **Test 1.1 cooking cycle 1** | **(grams)** | 77 | 1,3 |
| | **0,31** | 76 | 1,2 |
| | | 77 | 1,3 |
| | | 77 | 1,1 |
| **Test 1.2 cooking cycle 1** | **0,31** | 77 | 1,4 |
| | | 77 | 1,5 |
| | | 76 | 1,2 |
| | | 76 | 1,4 |
| **Test 2.1 cooking cycle 2** | **0,7** | 78 | 1,3 |
| | | 77 | 1,1 |
| | | 78 | 1,1 |
| | | 79 | 1,4 |
| **Test 2.2 - cooking cycle 2** | **0,58** | 78 | 1,2 |
| | | 77 | 1,3 |
| | | 77 | 1,5 |
| | | 78 | 1,6 |
| **Test 3.1 cooking cycle 3** | **0,9** | 81 | 1,9 |
| | | 80 | 1,9 |
| | | 80 | 1,6 |
| | | 81 | 2,2 |
| **Test 3.2 cooking cycle 3** | **0,78** | 82 | 1,2 |
| | | 82 | 1,7 |
| | | 82 | 2,6 |
| | | 89 | 8,6 |
| **Test 4.1 cooking cycle 4** | **1,01** | 90 | 8,8 |
| | | 91 | 9,1 |
| | | 91 | 9,3 |
| | | 92 | 10,6 |
| **Test 4.2 cooking cycle 4** | **0,89** | 91 | 10,0 |
| | | 90 | 8,9 |
| | | 91 | 9,6 |
| | | 90 | 8,8 |
| **Test 5.1 cooking cycle5** | **1,11** | 100 | 10,1 |
| | | 102 | 10,8 |
| | | 103 | 11,8 |
| | | 100 | 12,3 |
| **Test 5.2 cooking cycle 5** | **1,05** | 103 | 11,4 |
| | | 104 | 14,4 |
| | | 104 | 15,5 |
| | | 106 | 17,7 |

### Example 4: Comparative analytical tests of physicochemical composition

Physicochemical analyses of raw rice and the final product confirm that there are no significant losses of nutrients. The percentage reduction in protein and carbohydrates observed in the analyses is a result of the increased fat content, resulting from absorption during the dehydration process by frying. Similarly, the increase in caloric value is explained by the increased energy content of the food.

The table below demonstrates the results of the analyses. The data in the table show that the described process does not compromise the nutritional composition of the rice, since the reductions in protein and carbohydrate content are compensated by the increase in fat content, offering a tastier option with a higher caloric value.

| **Nutrient** | **Raw rice %** | **Final product %** |
|---|---|---|
| Total Calories | 351 | 463 |
| Protein | 6,7 | 6,5 |
| Fat | 0,4 | 14,1 |
| Carbohydrates | 80,1 | 77,5 |
| Moisture | 12,0 | 1,1 |
| Fiber | 0,30 | 0,29 |
| Ash | 0,50 | 0,48 |

### Example 5: Evidence proving the naturalness of the grains after the compaction step

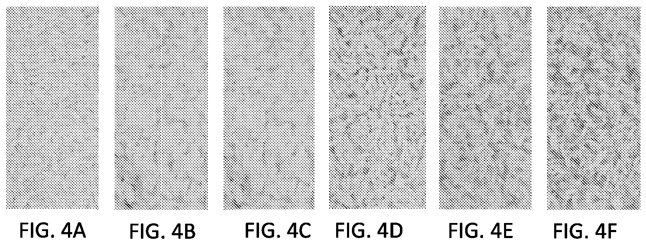

The behavior of the rice grains during the process was analyzed by comparing their physical characteristics, such as the appearance of the rice grain at different steps: raw (figure 4A), after the cooking process (figure 4B), after compaction (figure 4C), after dehydration by frying (figure 4D) and finally in its reconstitution without flavoring (figure 4E) and with the addition of flavoring (figure 4F).

These photos demonstrate the physical changes that rice undergoes during the process, providing a clear and comparative view of the transformations. The final result demonstrates the product's quality in terms of grain characteristics, highlighting the maintenance of its natural appearance throughout the process. Furthermore, this visual evidence strengthens the present innovative invention and the product's competitive differentiation in the food market.

### Example 6: Shelf-life tests

Product shelf-life tests were carefully conducted to determine the validity of the instant rice. For this purpose, accelerated tests were used, conducted in a specific climate chamber, which was duly calibrated at a temperature of 40°C and a relative humidity of 75%. These conditions were selected to obtain results that would reflect the product's behavior over time in an accelerated manner.

The following table presents the detailed results of the tests performed.

| | |
|---|---|
| **Produkt** | **Instant Rice Block** |
| **Test type** | **Accelerated - Climate Chamber at 40ºC - 75% RH** |
| **Fat type** | **Vegetable Fat** |
| **Film type** | **Polyester Laminate with Polyethylene** |

| **Analyses** | **Method** |
|---|---|
| **Sensory** | **Scores range from 1 to 5, with 5 being the ideal reference. Below 2 represents unacceptable sensory alterations** |
| **Moisture %** | **Oda ir Zenebon and Neus Sadocco Pascuet - Physicochemical methods for food analysis. 4th Edition. PROL Editora Gráfica - Brasilia 2005** |
| **Peroxide Index (mEg/Kg)** | **Analytical Standards of the Adolfo Lutz Institute: Oda ir Zenebon and Neus Sadocco Pascuet - Physicochemical methods for food analysis. 4th ed. Brasilia: Prol, 2005. p. 593** |
| **Acidity index (oleic acid) %** | **ADOLFO LUTZ INSTITUTE. Analytical Standards of the Adolfo Lutz Institute. Vol. 1. Chemical and Physical Methods for Food Analysis. 3rd ed. São Paulo: IMESP, 1985. pp. 245-246.** |

| **Microbiology:** | |
|---|---|
| **TotalPlateCount (UFC/g)** | **ISO 4833-1:2013** |
| **TotalColiforms (UFC/g)** | **ISO-4832:2006** |
| **Bacillus cereus (UFC/g)** | **ISO 7932:2004(E)** |
| **Salmonela sp (UFC/g)** | **ISO 6579-1:2017 Amd 1:2020** |
| **Molds and yeasts(UFC/g)** | **ISO 21527** |

### Results

| **Analyses** | **Time Zero** | **Time 15 days** | **Time 30 days** | **Time 60 days** |
|---|---|---|---|---|
| **Sensoryl** | **5** | **5** | **4** | **4** |
| **Moisture (%)** | **1,25%** | **1,28%** | **1,32%** | **1,80%** |
| **Peroxide Index (mEg/Kg)** | **0,15** | **0,22** | **0,35** | **0,44** |
| **Acidity index (oleic acid) %** | **0,020** | **0,025** | **0,032** | **0,045** |

| **Microbiology:** | | | | |
|---|---|---|---|---|
| **Total Plate Count (UFC/g)** | **<100** | **<100** | **<100** | **<100** |
| **Total Coliforms (UFC/g)** | **<10** | **<10** | **<10** | **<10** |
| **Bacillus cereus (UFC/g)** | **<10** | **<10** | **<10** | **<10** |
| **Salmonela sp (UFC/g)** | **aus/25g** | **aus/25g** | **aus/25g** | **aus/25g** |
| **Molds and yeasts((UFC/g)** | **<10** | **<10** | **<10** | **<10** |

Based on the detailed results presented in the table above, it is verified that the control parameters remain within the stability limits during the accelerated test conditions. These results provide evidence that the product has an adequate shelf life and meets the required stability requirements.

This information is important and necessary for the protection of the innovation and for the commercial success of the product, confirming its quality and durability.

It should be understood that the present description does not limit the application to the details described herein and that the invention is capable of other embodiments and of being practiced or performed in a variety of ways, within the scope of the claims. Although specific terms have been used, such terms should be interpreted in a generic and descriptive sense, and not for the purpose of limitation.

## Claims

1. Process for producing instant rice in block form, **characterized by the fact that** it comprises the steps of:
a) Dosing of rice grains into individual portions:
b) Continuous cooking in a two-compartment tunnel with constant water exchange;
c) Moulding and compaction into blocks;
d) Dehydrating by frying; and
e) Cooling and packaging.

2. The process, according to claim 1, **characterized by the fact that** the rice grains from the dosing step are directed into moulds comprising a permeable mesh that promotes the containment of the rice.

3. The process, according to one of claims 1 or 2, **characterized by the fact that** the cooking process takes place in a tunnel with two separate compartments, in which
- the first compartment performs a continuous washing of the grains, with constant water exchange at a rate of 15 to 20 minutes, with a water-to-rice ratio of approximately 12.8:1, and a grain retention time of 4 to 6 minutes, during which the grains are submerged in circulating water at a temperature of 90 to 98 °C;
- the second compartment performs the final cooking process continuously with a retention time of 4 to 6 minutes and a water renewal rate of 50%, in which the grains are submerged in water at a temperature of 90 to 98 °C.

4. The process, according to any of claims 1 to 3, **characterized by the fact that** in the compaction of rice in block form, a piston compresses the rice in block form with a pressure of 1.0 to 1.2 kg/cm².

5. The process, according to claim 4, **characterized by the fact that** the piston is coated with non-stick material.

6. The process, according to any of claims 4 to 5, **characterized by the fact that** during the compaction of the rice in block form, it is ensured that:
- the force applied for compaction is sufficient to bind the grains together without causing deformation.

7. The process, according to any of claims 1 to 6, **characterized by the fact that** the dehydration step takes place in a continuous frying tunnel, with the oil maintained at a temperature of 140 to 160 °C throughout the entire process, where the initial temperature is adjusted to 150 to 180 °C, and with a retention time of 10 minutes.

8. The process, according to claim 7, **characterized by the fact that** heat transfer occurs from the oil to the evaporation of water present in the block, being part of the oil incorporated into the product.

9. The process, according to claim 8, **characterized by the fact that** physical and chemical procedures are carried out to mitigate lipid oxidation and hydrolytic oxidation.

10. The process, according to the claim 9, **characterized by the fact that** the physical procedures are:
- controlled elimination of water vapor resulting from the dehydration step, accumulated at the top of the tunnel;
- use of a heat exchanger to cool the fat during line shutdowns;
- transfer of the fat present in the tunnel to a surge tank, passing through a filter screen for the removal of particles;
- passage of fat through the heat exchanger; and
- fat storage in the surge tank.

11. The process, according to claim 10, **characterized by the fact that** the dehydration step line has two sets of filters that operate in compensation mode, where the processed fat passes continuously as it is pumped to the heat exchanger, which is used to recover the temperature of the medium.

12. The process, according to claim 9, **characterized by the fact that** the chemical process uses a composition of oils with a high content of monounsaturated fatty acids and antioxidants.

13. The process, according to any of claims 1 to 12, **characterized by the fact that** the fried rice block is demoulded and transferred from the moulds to a conveyor belt at the entrance to the cooling and packaging step.

14. A composition for mitigating oxidation, **characterized by the fact that** the composition comprises:
Mixture of alpha, beta, gamma and delta tocopherols - 300 mg/kg
Ascorbyl palmitate - 100 mg/kg
Rosemary extract - 30 mg/kg
TBHQ - 70 mg/kg
Citric acid - 200 mg/kg.

15. The process, according to any of claims 1 to 13, **characterized by the fact that** the cooling step reduces the temperature of the rice in block form to below 40°C, and then a sachet containing the seasonings for flavoring the instant rice in block form is added.

16. Instant rice in block form, **characterized by the fact that** the rice is obtained according to the process defined in any one of claims 1 to 13.
